# EUROPEAN PATENT APPLICATION

(11) **EP 1 159 865 A1**
(43) Date of publication of application: **05.12.2001**
(21) Application number: 01202039.2
(22) Date of filing: 29.05.2001
(51) Int. Cl.: A01D 25/04, A01G 23/04

(54) **Harvester for plants with an underground part**

(30) Priority: 29.05.2000 NL 1015333
(71) Applicant: Fa. Gebr. Ezendam V.O.F., 7622 AW Borne (NL)
(72) Inventor: Ezendam, Jan Pontianus, 7622 AW Borne (NL); Ezendam, Nicodemus Assisius, 7626 LX Hertme (NL)
(74) Representative: Jorritsma, Ruurd

(57) **Abstract**

The invention relates to a harvesting device for harvesting plants with an underground plant part, such as trees or bushes. The harvesting device comprises two cutting wheels (11,12), which are positioned at a lateral distance from one another, for cutting free a strip of earth which is laterally defined by the said cutting wheels (11,12). The harvesting device also comprises removal means (14,15,16) for guiding the strip of earth which has been cut free away from the cutting wheels (11,12). The rotation pins (18,19) of the cutting wheels (11,12), as seen in the longitudinal direction of the strip of earth which is to be cut free, are at a distance of from ¼ D to 1½ D from one another, where D is the diameter of the cutting wheels (11,12). The cutting wheels (11,12) may be designed so that they can pivot about in each case one pivot pin (25,29) extending in the upward direction, which pivot pin (25,29) in in this case, as seen in the harvesting direction, lies in front of the rotation pin (18,19) of the respective cutting wheel (11,12). Moreover, the pivot pin (25,29) of each respective cutting wheel (11,12) may lie on that side of the plane defined by the said respective cutting wheel (11,12) which is remote from the strip of earth.

## Description

The present invention relates to a harvesting device for harvesting plants with an underground plant part, such as trees or bushes, the harvesting device comprising:
- two cutting wheels which are positioned at a lateral distance from one another, for cutting free a strip of earth which is laterally defined by the said cutting wheels, and
- removal means for guiding the strip of earth which has been cut free away from the cutting wheels.

A harvesting device of this type is known from NL Patent 1,004,327. The harvesting device described in this patent is intended in particular for harvesting conifers. This known harvesting device, which can be attached to the side of a tractor, has two cutting wheels which are positioned opposite to and at a distance from one another on a common axis of rotation, these cutting wheels also being known as coulter wheels which cut free the strip of earth on either side of a row of conifers. The underside of the strip of earth is cut free by means of a spoon-like, horizontal blade. The strip of earth which has been cut free is guided obliquely upwards to a second cutting device via a channel with a conveyor belt on its base. At this second cutting device, the strip of earth, whenever a conifer moves past earth-clod cutting means, is cut through on either side of this conifer in the transverse direction in order to form clods of earth which are substantially square when seen from above and have been separated from the strip of earth.

This known installation has a number of shortcomings which mean that the reliability of operation of the known harvesting device leaves something to be desired. A significant drawback is that the strip of earth is damaged when it is being cut free and fed to the removal means. The strip of earth breaks and/or tears, which, inter alia, may lead to undesirable damage to the roots of the plant to be harvested.

It is an object of the present invention to provide an improved harvesting device of the type described in the introduction, which harvesting device in particular overcomes the abovementioned shortcomings.

According to the invention, this object is achieved, in a harvesting device of the type described in the introduction, by the fact that the rotation pins of the cutting wheels, as seen in the longitudinal direction of the strip of earth to be cut free, are at a distance of from ¼ D to 1½ D from one another, where D is the diameter of the cutting wheels. This offset positioning of the cutting wheels reduces in particular the upward lift exerted on the strip of earth by the cutting wheels. As seen in the diametral plane of the cutting wheel, a cutting wheel will, under the influence of friction along the side of the strip of earth, exert a downwardly directed frictional force on the strip of earth by means of one half of the diametral plane, as seen with respect to a vertical line of intersection through the axis of rotation, and will exert an upwardly directed frictional force on the strip of earth by means of the other half of the said diametral plane. If the cutting wheels turn, in the direction of forward movement of the harvesting device, in the same way as ordinary wheels, this means that the front half of the diametral plane will in each case exert the downwardly directed frictional force on the strip of earth and that the rear half of the diametral plane will in each case exert the upwardly directed frictional force. If, according to the invention, the cutting wheels are now positioned offset from one another, assuming that the cutting wheels rotate in the same way as the standard wheels of a car, the upward lift applied by the back half of the front cutting wheel is partly or completely compensated for by the downwardly directed frictional force of the front half of the back wheel. What then remains is the upward lift caused by the rear side of the back cutting wheel. However, this upward lift is considerably lower, since the strip of earth opposite this rear side is not clamped in the transverse direction between two cutting wheels, or at least is clamped to a much lesser extent between two cutting wheels. Moreover, the fact that the cutting wheels are positioned offset with respect to one another means that the distance from the location where the upward lift is produced to the front end of the strip of earth which has already been cut is greater, so that the moment exerted on the strip of earth by the lifting forces is lower. Consequently, the risk of the strip of earth which has been cut free tearing and/or breaking at the cutting wheels is considerably reduced and even, under certain circumstances, eliminated altogether.

With a view to neutralizing the upward lift of the front cutting wheel, it is preferable, according to the invention, if the distance between the rotation pins of the cutting wheels is at most approximately D, preferably approximately equal to ½ D.

A further drawback of the known harvesting device is the track-following performance of its cutting wheels. If the cutting wheels encounter an obstacle, they may come out of the track which they are to follow for the row of conifers to be harvested and may then be unable to return to this track of their own accord. This problem with track-following also occurs if the known harvesting device is not moved precisely in a straight line along the row of conifers to be harvested. It is difficult if not impossible to travel through controlled bends with the known harvesting device. According to the invention, a good track-following harvesting device is obtained if the cutting wheels can pivot about in each case one pivot pin extending in the upward direction and if the pivot pin of each respective cutting wheel, as seen in the harvesting direction, lies in front of the rotation pin of the respective cutting wheel, preferably completely in front of the respective cutting wheel. Therefore, in the harvesting device according to the invention, the cutting wheels are suspended in the manner of a direction-tracking swivel caster. In this context, it should be pointed out that for cutting wheels which are suspended in the manner of track-following swivel casters, the rotation pins of these cutting wheels could also coincide with one another. In other words, according to a second aspect the invention also relates to a:
harvesting device for harvesting plants with an underground plant part, such as trees or bushes, the harvesting device comprising:
- two cutting wheels which are positioned at a lateral distance from one another, for cutting free a strip of earth which is laterally defined by the said cutting wheels, and
- removal means for guiding the strip of earth which has been cut free away from the cutting wheels,
characterized in that the cutting wheels can pivot about in each case one pivot pin extending in the upward direction, and in that the pivot pin of each respective cutting wheel, as seen in the harvesting direction, lies in front of the rotation pin of the respective cutting wheel, preferably completely in front of the respective cutting wheel. It should be or become clear that the harvesting device according to this second aspect of the invention can be combined as such with the characterizing features of one or more of Claims 4-9 and also with the characterizing features of Claims 1 or 2.

Furthermore, it is highly advantageous, with the cutting wheels according to the invention suspended in the manner of a direction-tracking swivel caster, if the pivot pin of each respective cutting wheel lies on that side of the plane defined by the said respective cutting wheel which is remote from the strip of earth. The result of this is that the cutting wheels which are suspended in the manner of direction-tracking swivel casters tend to adopt a position which converges slightly in the direction of forward movement. Consequently, the front halves of the cutting wheels exert a greater lateral pressure on the strip of earth than their rear halves. This may also lead to the width of the strip of earth being smaller or at least slightly smaller than the passage width which is left clear by the rear halves of the cutting wheels. All this is not only of great benefit to the track-following performance, but also, with cutting wheels which co-rotate in the direction of forward movement in the manner of an ordinary wheel, creates an additional solution to the problem which arises in the known harvesting device that the strip of earth tends to tear and/or crack. In this context, therefore, it should be noted that this tendency of the strip of earth to tear and/or break, when using cutting wheels in a general sense, can be counteracted by arranging the cutting wheels so that they converge in the harvesting direction. In other words, according to a third aspect, the invention also relates to a harvesting device for harvesting plants with an underground plant part, such as trees or bushes, the harvesting device comprising:
- two cutting wheels which are positioned at a lateral distance from one another, for cutting free a strip of earth which is laterally defined by the said cutting wheels, and
- removal means for guiding the strip of earth which has been cut free away from the cutting wheels,
characterized in that the cutting wheels, as seen in the harvesting direction of the harvesting device, are in a convergent arrangement. It should be or at least become clear that the harvesting device according to this third aspect of the invention can as such be combined with the characterizing features of one or more of Claims 5-9 and also with the characterizing features of Claims 1, 2 and/or 3.

According to an advantageous embodiment of the invention, the removal means comprise a channel with side walls which rise vertically from a base, and endless conveyor belts extend over the base and along the side walls of the channel. In this way, it becomes possible to convey the strip of earth by means of conveyor belts which act on this strip of earth from the sides and the bottom. The load exerted on the strip of earth by externally acting conveyor means is then relatively evenly distributed, which counteracts tearing, crumbling or breaking of the strip of earth. The endless conveyor belt extending along the base and/or the endless conveyor belts extending along the side walls may advantageously be provided with driving ribs.

According to a further advantageous embodiment of the invention, the removal means open out at earth-clod cutting means, the earth-clod cutting means comprise two elongate blade parts which extend upwards and are mounted on a common carrier arm extending in the transverse direction of the blade parts, and the carrier arm is arranged so that it can rotate, halfway along the blade parts, about an axis of rotation which extends in the centre between the blade parts, the distance between the blade parts is greater than or equal to the lateral distance between the cutting wheels, and drive means engage on the carrier arm, so that it can be rotated or pivoted about its axis of rotation. In this way, it becomes possible to form clods of earth which, in plan view, are partly or completely round and can be placed in round plant pots or can be held together in a net. To increase the working efficiency of the earth-clod cutting means, it is preferable, according to the invention, if the blade parts have a cutting edge on two sides. In each case, the blade parts can cut one clod of earth out of the strip of earth in a movement in one direction and can cut a subsequent clod of earth out of the strip of earth in the return movement.

The present invention will be explained in more detail below with reference to an exemplary embodiment which is diagrammatically depicted in the drawing, in which:
Fig. 1 shows a diagrammatic side view, partially in section, of a harvesting device according to the invention which is mounted on a tractor;
Fig. 2 shows, as a detail, a diagrammatic, perspective view of the cutting wheels of the harvesting device according to the invention;
Fig. 3 shows, as a detail, a diagrammatic and perspective view of the earth-clod cutting means of a harvesting device according to the invention;
Fig. 4 shows a highly diagrammatic and perspective plan view of the cutting wheels, in order to further clarify the way in which they are attached to the harvesting device according to the invention; and
Fig. 5 shows a highly diagrammatic view in the direction of arrow V from Fig. 4.

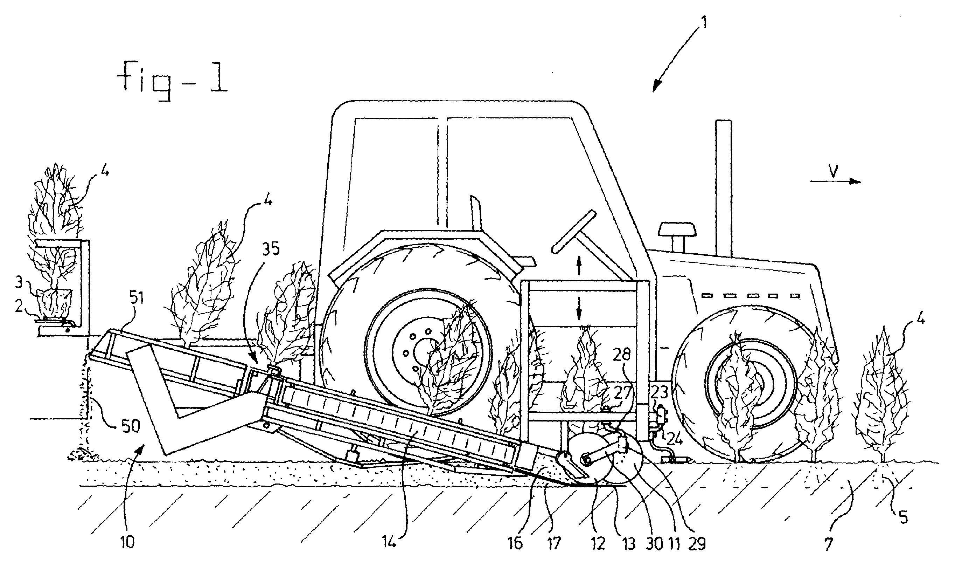

Fig. 1 diagrammatically depicts a tractor 1 with a forwards direction of movement V, which tractor 1 is provided with a harvesting device 10 according to the invention situated on the side of the tractor 1. Towards the rear, the harvesting device 10 is followed by a platform 2 on which clods of earth 3 which have been separated from the strip of earth, together with plants 4 with roots 5 in the clods of earth, can be placed. This platform 2 will advantageously form part of a trailer which is pulled by the tractor 1.

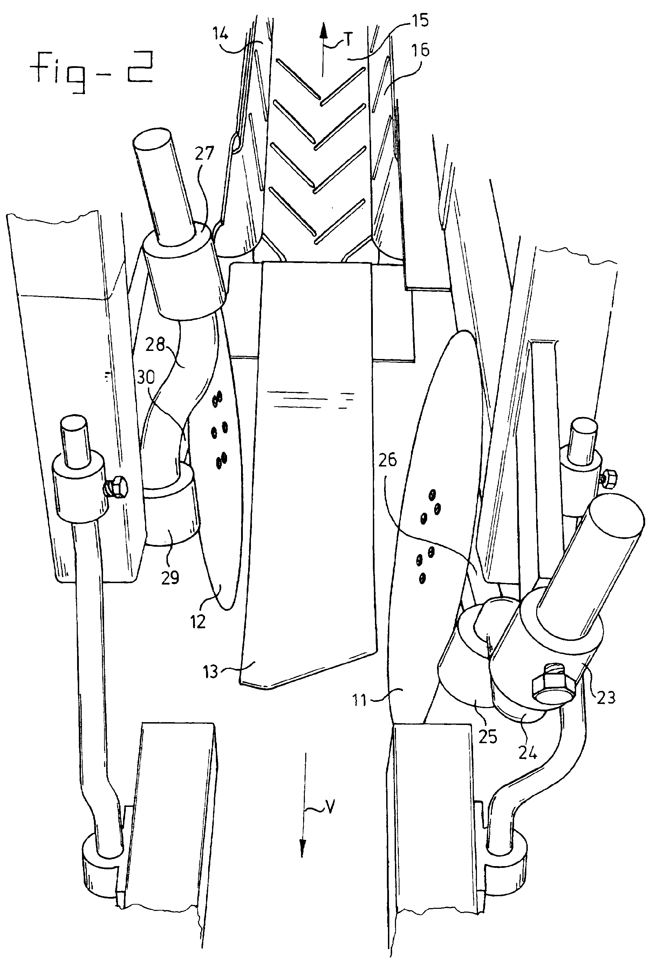

Referring in particular to Figs. 1, 2 and 3, the harvesting device according to the invention comprises two cutting wheels 11, 12, also known as coulter wheels, and a substantially horizontal bottom cutting blade 13 which, at the rear side, continues by merging into a guide plate 17 which runs obliquely upwards and is adjoined by removal means 14, 15, 16 which lead to earth-clod cutting means 35.

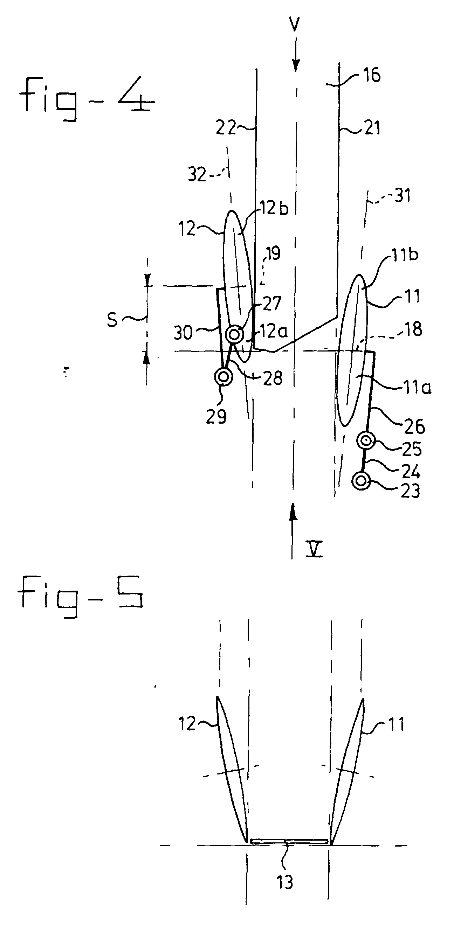

Referring in particular to Figs. 1, 2, 4 and 5, the cutting wheels 11 and 12, as seen in the direction of forward movement V, are positioned with their axes of rotation 18 and 19, respectively, positioned spaced apart by a distance S which, as can be seen in Fig. 4, is equal to half the diameter of the respective cutting wheels 18, 19, which have substantially the same diameter, or at least is approximately equal to half the diameter of these wheels. The front cutting wheel 11 which is positioned further forwards as seen in the direction of forward movement, in the event of rotation in the clockwise direction (corresponding to the direction of rotation of the wheels of the tractor 1) as shown in Fig. 1, will use its front half 11a, as it moves past the strip of earth which is to be cut free, to exert a downwardly directed frictional force on the side 21 of the said strip of earth and will use its rear half 11b to exert an upwardly directed frictional force, which acts as a lifting force, on this strip of earth. The rear cutting wheel 12, as seen in the direction of forward movement V, will use its front half 12a, in the same way as the front half 11a of the front cutting wheel 11, to exert a downwardly directed frictional force on the side 22 of the strip of earth 16. This frictional force, which is exerted in the vertically downwards direction by the front half 12a of the rear cutting wheel 12, will completely or partially neutralize or even overcompensate for the lifting force exerted on the strip of earth 16 by the rear half 11b of the front cutting wheel 11. The rear half 12b of the rear cutting wheel 12 will, like the rear half 11b of the front cutting wheel 11, still be able to exert an upward lifting force on the strip of earth 16. However, since no force is being exerted on the strip of earth 16 on the other side 21 of the strip of earth 16, as seen transversely to the direction of forward movement V, the strip of earth 16 preferably being completely free on that side, this upward lift produced by frictional contact with the rear side 12b of the rear cutting wheel 12 will be relatively low. Moreover, the lifting force which is applied to the strip of earth is in any case reduced by half, since the lifting force caused by contact with the rear half 11b of the front cutting wheel 11 has been neutralized.

The front cutting wheel 11 is attached to the harvesting device via an arm 24 which is rigidly connected to the frame of the harvesting device at 23. The connection at 23 only allows vertical adjustment of the arm 24. During operation, however, the connection at 23 is rigidly fixed. Arm 24 bears a further arm 26 which, at 25, is attached to arm 24 in such a manner that it can hinge about an axis of rotation 25 which extends upwards. Arm 26 in turn bears the front cutting wheel 11. Therefore, the cutting wheel 11 is mounted in the manner of a swivel caster which follows the direction of forward movement V.

The rear cutting wheel 12 is attached to the harvesting device via an arm 28 which is rigidly connected to the frame of the harvesting device at 27. The connection at 27 only allows vertical adjustment of the arm 28. During operation, however, the connection at 27 is rigidly fixed. Arm 28 bears a further arm 30 which, at 29, is attached to arm 28 in such a manner that it can hinge about an axis of rotation 29 which extends upwards. Arm 30 in turn bears the rear cutting wheel 12. Therefore, the cutting wheel 12 is mounted in the manner of a swivel caster which follows the direction of forward movement V.

As has been made clear in particular in Fig. 4, the axes of rotation 25 and 29 of the front cutting wheel 11 and the rear cutting wheel 12, respectively, lie on that side of the diametral planes 31 and 32, respectively, enclosed by the respective cutting wheels which is remote from the strip of earth 16. This arrangement means that the cutting wheels 11 and 12 tend to adopt a position which converges in the direction of forward movement V (specifically the diametral planes 31 and 32 have a common line of intersection in the direction of forward movement V). Consequently, the rear sides 11b and 12b of the cutting wheels come to lie clear of the sides 21 and 22, respectively, of the strip of earth 16 and therefore do not exert any frictional forces, or at least only exert a greatly reduced frictional force, on the strip of earth.

In order to cut free a strip of earth which tapers vertically downwards, the cutting wheels 11 and 12 are arranged so that, as seen in the vertical direction, they taper downwards, as shown in more detail in Fig. 5.

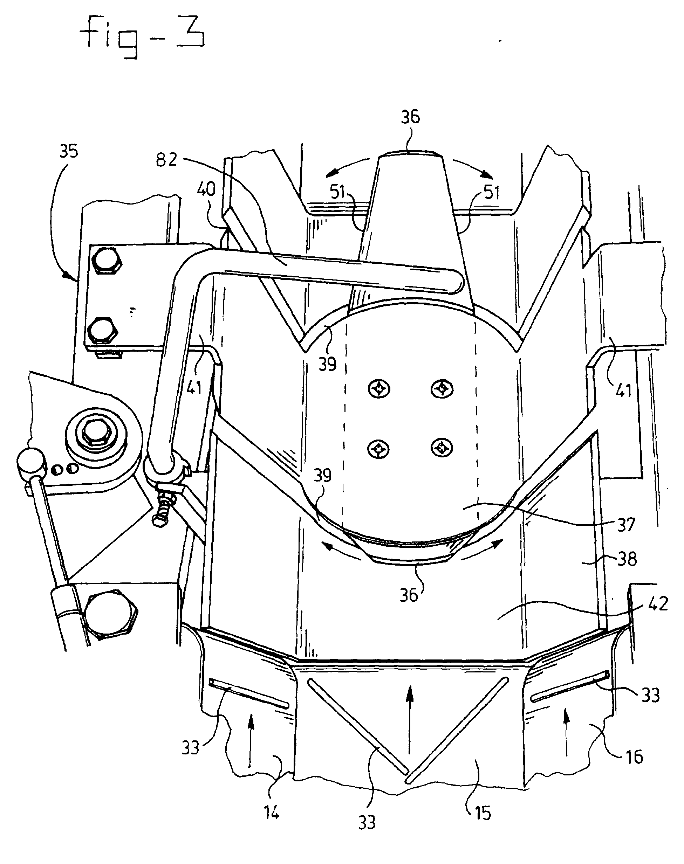

Referring in particular to Figs. 1, 2 and 3, the removal means 14, 15 and 16 comprise three conveyor belts which, together, define a channel for receiving the strip of earth 16 which has been cut free. Conveyor belt 15 forms the base of the channel, and conveyor belts 14 and 16 form the side walls of the channel. The conveying directions of the conveyor belts are indicated in more detail by means of arrows in Figs 3. and 2. The conveyor belts 14, 15 and 16 are provided with driving ribs 33 in order to drive the strip of earth along more successfully. The removal means 14, 15 and 16 continue to the earth-clod cutting means 35. The earth-clod cutting means 35 comprise two elongate blade parts 36 which extend upwards from the channel defined by the conveyor belts 14, 15 and 16. These blade parts have two cutting edges 51 and are mounted on a common carrier arm, which extends in the transverse direction of the said blade parts and lies beneath the trough-like channel part 38 which lies in line with the conveyor belts 14, 15 and 16. From the carrier arm 37, the blade parts 36 project into the channel part 38 through slot 39, which is in the form of an arc of a circle, at least in the position illustrated in Fig. 3. Consequently, the blade parts 36, as indicated by means of arrows in Fig. 3, can pivot back and forth along an arc of a circle by moving the arm 37 back and forth, for example by means of a piston/cylinder unit engaging on the arm 37. In the process, the blade parts 36 can leave the channel via slots 44 formed in the side walls of the channel part 38, in order to lie outside the channel next to the side-wall parts 41. If, by way of example, a conifer is then situated in that region of the channel part 38 which is delimited between the arc-shaped slots 39, it is possible for the blade parts 36 to enter the channel from outside the channel via the slots 40, to rotate through the entire channel and then to leave the channel at the other, opposite side. In this way, therefore, a clod of earth with delimiting walls which are partially in the form of an arc of a circle has been cut out of the strip of earth. If it is then observed that a subsequent conifer is then situated in the region which is delimited by the slots 39, the blade parts 36 can be pivoted in the opposite direction, in order to form the next clod of earth, by cutting using the opposite blade edges 51. The fact that a conifer or some other form of bush, tree or plant is situated in the region delimited by the slots 39 can be observed, for example, by means of the sensor arm 82. The trunk or branches of the plant will press against the arm 42, which can then activate the means for pivoting the arm 37 in order to execute a cutting movement using the blade parts 36.

The blade parts 36 may extend perpendicular to the base 42 of the channel part 38 if, for example, substantially cylindrical clods of earth are desired. In general, however, the blade parts 36 will diverge upwards from the arm 37, in order to be able to form a clod of earth which tapers towards the bottom.

The clods of earth which have been cut free can be lifted out of the strip of earth by an operator (not shown in Fig. 1) and placed onto a platform 2. If appropriate, the clod of earth may first be provided with an enclosing net in order to keep the clod of earth together. It is also conceivable for the clod of earth to be placed directly into a pot.

Furthermore, it is quite conceivable for the bushes 4 together with clod of earth 3 to be automatically lifted out of the strip of earth and dealt with further. The material of the strip of earth which remains after the removal of the clods of earth 3 which have been cut out can, as indicated by 50, drop downwards, at the end of the further channel part 51, into the trench which has been formed as a result of the strip of earth being cut out.

## Claims

1. Harvesting device (10) for harvesting plants (4) with an underground plant part (5), such as trees or bushes, the harvesting device comprising:
- two cutting wheels (11, 12) which are positioned at a lateral distance from one another, for cutting free a strip of earth (16) which is laterally defined by the said cutting wheels, and
- removal means (14, 15, 16) for guiding the strip of earth (16) which has been cut free away from the cutting wheels (11, 12),
**characterized in that** the rotation pins (18, 19) of the cutting wheels (11, 12), as seen in the longitudinal direction of the strip of earth which is to be cut free, are at a distance (S) of from ¼ D to 1½ D from one another, where D is the diameter of the cutting wheels.

2. Harvesting device (10) according to Claim 1, **characterized in that** the distance between the rotation pins (18, 19) of the cutting wheels is at most approximately D, preferably is approximately equal to ½ D.

3. Harvesting device (10) according to one of the preceding claims, **characterized in that** the cutting wheels (11, 12) can pivot about in each case one pivot pin (25 or 29, respectively) extending in the upward direction, and **in that** the pivot pin (25 or 29) of each respective cutting wheel (11, 12), as seen in the harvesting direction V, lies in front of the rotation pin (18, 19) of the respective cutting wheel (11, 12), preferably completely in front of the respective cutting wheel (11, 12).

4. Harvesting device according to Claim 3, **characterized in that** the pivot pin (25 or 29) of each respective cutting wheel (11, 12) lies on that side of the plane (31 or 32) defined by the said respective cutting wheel (11, 12) which is remote from the strip of earth (16).

5. Harvesting device according to Claim 4, **characterized in that** the distance from the pivot pin (25 or 29) to the plane (31 or 32) defined by the respective cutting wheel is less than 0.03 D.

6. Harvesting device according to one of the preceding claims, **characterized in that** the removal means (14, 15, 16) comprise a channel with side walls which rise upwards from a base, and **in that** endless conveyor belts (14, 15, 16) extend over the base and along the side walls.

7. Harvesting device according to Claim 6, **characterized in that** the endless conveyor belt (15) extending along the base and/or the endless conveyor belts (14, 16) extending along the side walls are provided with driving ribs (33).

8. Harvesting device according to one of the preceding claims, **characterized in that** the removal means (14, 15, 16) open out at earth-clod cutting means (35), and **in that** the earth-clod cutting means (35) comprise two elongate blade parts (36) which extend upwards and are mounted on a common carrier arm (37) extending in the transverse direction of the blade parts (36), **in that** the carrier arm (37) is arranged so that it can rotate, halfway along the blade parts (36), about an axis of rotation which extends in the centre between the blade parts (36), and **in that** the distance between the blade parts (36) is greater than or equal to the lateral distance between the cutting wheels (11, 12), and **in that** drive means engage on the carrier arm (37), so that it can be rotated or pivoted about its axis of rotation.

9. Harvesting device according to Claim 8, **characterized in that** the blade parts (36) have a cutting edge (51) on two sides.
